# FASCICULE DE BREVET EUROPEEN

(11) **EP 0 903 509 B1**
(45) Date de publication et mention de la délivrance du brevet: **07.07.2004**
(21) Numéro de dépôt: 98420160.8
(22) Date de dépôt: 17.09.1998
(51) Int. Cl.: F16C 11/06

(54) **Procédé d'assemblage d'une rotule d'articulation et rotule d'articulation obtenue par un tel procédé**
Verfahren zum Zusammenbau eines Kugelgelenkes und so erhaltenes Kugelgelenk
Assembling procedure of a ball-joint and ball-joint obtained thereby

(30) Priorité: 19.09.1997 FR 9711906
(43) Date de publication de la demande: 24.03.1999
(73) Titulaire: SARMA, F-26240 Saint-Vallier (FR)
(72) Inventeur: Buard, Michel, 26240 Saint-Vallier (FR)
(74) Mandataire: Myon, Gérard Jean-Pierre

(56) Documents cités:
- CH-A- 479 816
- DE-A- 1 425 945
- DE-C- 892 404
- US-A- 3 084 417
- US-A- 5 405 200

## Description

L'invention a trait à un procédé d'assemblage d'une rotule et à une rotule d'articulation.

Il est connu de réaliser une rotule d'articulation, comprenant une bague extérieure, pourvue d'une surface interne globalement sphérique, et une bague intérieure, pourvue d'une surface externe globalement sphérique, ces deux surfaces sphériques étant sensiblement de même rayon, de façon à permettre un mouvement de rotation dans toutes les directions de la bague intérieure dans la bague extérieure.

Par ailleurs, le perçage central de la bague intérieure peut être dimensionné et conformé en fonction des dimensions extérieures de l'arbre ou de la bielle dont une extrémité est destinée à être logée dans ce perçage central. Il arrive donc fréquemment que le perçage central de la bague intérieure d'une rotule ne soit pas symétrique par rapport à un plan médian perpendiculaire à l'axe de révolution de ces bagues. En outre, il arrive également, relativement fréquemment, que la bague externe ne soit pas symétrique, elle non plus, car elle comporte une patte, un bossage ou tout autre moyen équivalent de raccordement ou de fixation par rapport à son environnement extérieur. Compte tenu de ce qui précède, l'orientation de la bague intérieure par rapport à la bague extérieure autour d'un axe perpendiculaire à l'axe de révolution de ces bagues n'est pas indifférente.

Or, dans les rotules connues de l'art antérieur, il est possible de faire tourner la bague intérieure de la rotule de 180° autour d'un axe perpendiculaire à l'axe de révolution des bagues, de sorte que l'orientation du perçage central de la bague intérieure par rapport à la bague extérieure peut être inversée de 180° par rapport à l'orientation prévue. Dans ce cas, la bague intérieure peut se retrouver dans une position dans laquelle son perçage central ne coopère pas de façon optimale avec l'arbre ou la bielle qu'il est destiné à recevoir. Ce mauvais assemblage peut entraîner des contraintes dans l'arbre ou la bague telles qu'une rupture de l'un de ces deux éléments ne peut pas être exclue, en particulier sous de fortes contraintes, notamment dans le domaine des bielles de structure d'aéronef.

C'est à ces inconvénients qu'entend remédier l'invention en proposant un procédé d'assemblage d'une rotule permettant d'éviter, une fois la rotule montée, que la bague intérieure ne soit retournée dans une position non compatible avec la géométrie de son perçage central.

Dans cet esprit, l'invention concerne un procédé d'assemblage d'une rotule comprenant une bague extérieure et une bague intérieure, ladite bague intérieure comprenant une surface externe sensiblement sphérique et deux surfaces latérales, caractérisé en ce qu'il consiste à déformer plastiquement au moins une surface latérale de ladite bague intérieure au voisinage d'une zone de raccordement de ladite surface latérale avec ladite surface sphérique, de telle sorte que ladite surface sphérique est déformée vers l'extérieur, la déformation de cette surface latérale ayant lieu après le montage de la bague intérieure dans la bague extérieure.

Grâce au procédé de l'invention, la déformation vers l'extérieur de la surface sphérique de la bague intérieure empêche le passage de la zone de raccordement ainsi déformée à l'intérieur de la bague extérieure, de telle sorte que la bague intérieure ne peut pas être retournée de 180° par rapport à sa position nominale.

Selon un aspect avantageux de l'invention, la déformation de la surface latérale a lieu par poinçonnage ou sertissage. Cet aspect de l'invention permet de déformer la surface extérieure sphérique de la bague intérieure en repoussant à froid la matière située entre la zone de déformation de la surface latérale et la surface sphérique. On peut avantageusement prévoir que le poinçonnage est effectué à l'aide d'une ou plusieurs billes. Cette manière de procéder est facilement mise en oeuvre.

L'invention concerne également une rotule d'articulation fabriquée selon le procédé tel que précédemment décrit. L'invention concerne, en outre, une rotule d'articulation comprenant une bague extérieure, pourvue d'une surface interne globalement sphérique, et une bague intérieure, pourvue d'une surface externe globalement sphérique de rayon sensiblement identique à celui de la surface interne de ladite bague extérieure et deux surfaces latérales reliant ladite surface sphérique externe à un perçage central de ladite bague intérieure, caractérisée en ce que l'une au moins desdites surfaces latérales est déformée plastiquement au voisinage d'une zone de raccordement de ladite surface latérale avec ladite surface sphérique externe, de telle sorte que ladite surface sphérique externe est déformée vers l'extérieur.

La rotule de l'invention présente la caractéristique remarquable que la bague intérieure ne peut pas être tournée de 180° autour d'un axe perpendiculaire à l'axe de révolution des bagues, car la partie déformée de sa surface sphérique vient en butée contre la surface sphérique interne de la bague externe.

Selon un premier aspect avantageux de la rotule de l'invention, la surface latérale est entaillée d'une gorge annulaire au voisinage de sa zone de raccordement avec la surface sphérique, cette gorge définissant une lèvre entre elle-même et la zone de raccordement, cette lèvre étant repoussée vers l'extérieur à partir de ladite gorge. Selon cet aspect de l'invention, la lèvre est écartée de façon à augmenter localement le rayon de la surface sphérique externe de la bague intérieure, ce qui permet son verrouillage par rapport à la surface sphérique interne de la bague extérieure.

On peut prévoir que la lèvre est repoussée par poinçonnage ou sertissage, après réalisation de la gorge par usinage. Dans ce cas, le positionnement et les dimensions transversales de la gorge sont définis avec précision et la gorge peut avoir une profondeur relativement importante sans contrainte notable dans la partie principale de la bague intérieure.

Selon une autre approche, on peut prévoir que la lèvre est repoussée par poinçonnage ou moletage au cours de la réalisation de la gorge. Dans ce cas, la déformation de la surface externe de la bague intérieure et la création de la gorge ont lieu en une seule opération, ce qui induit un gain de temps et donc une diminution de coût par rapport à l'approche précédente.

Selon un autre aspect avantageux de l'invention, la gorge annulaire est composée de plusieurs sections correspondant chacune à un secteur angulaire. En d'autres termes, il n'est pas obligatoire que la gorge annulaire s'étende sur 360° autour de l'axe de révolution des bagues. En effet, le coincement de la bague intérieure dans la bague extérieure est obtenu dès lors que sa surface sphérique externe est déformée en au moins un point.

Selon un mode de réalisation particulier de l'invention, la surface latérale est marquée d'au moins une empreinte obtenue par poinçonnage au voisinage de la zone de raccordement de la surface latérale avec la surface sphérique. Dans ce cas, on utilise le fait que ce marquage résulte dans une déformation locale de la bague intérieure induisant un repoussage de sa surface sphérique externe, de telle sorte que l'on obtient un verrouillage de la bague intérieure dans la bague extérieure.

L'invention sera mieux comprise et d'autres avantages de celle-ci apparaîtront plus clairement à la lumière de la description qui va suivre de deux modes de réalisation d'une rotule conforme à son principe et de son procédé d'assemblage, donnée uniquement à titre d'exemple et faite en référence aux dessins annexés dans lesquels :
- la figure 1 est une coupe transversale d'une rotule conforme à un premier mode de réalisation de l'invention ;
- la figure 2 est une vue de côté de la rotule de la figure 1 ;
- la figure 3 est une vue à plus grande échelle du détail III à la figure 1 et
- la figure 4 est une vue analogue à la figure 2 pour une rotule conforme à un second mode de réalisation de l'invention.

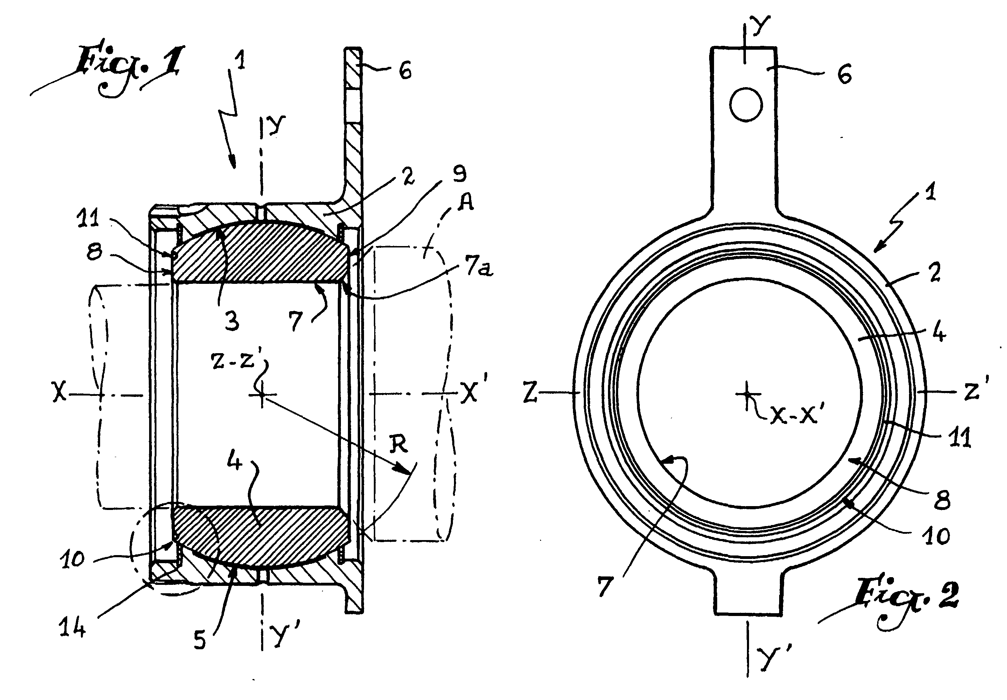

La rotule 1 représentée à la figure 1 comprend essentiellement une bague extérieure 2 pourvue d'une surface interne sensiblement sphérique 3 et une bague intérieure 4 munie d'une surface externe sensiblement sphérique 5. Les surfaces 3 et 5 ont un rayon R sensiblement identique. La bague 2 porte au moins une patte 6 de fixation sur un élément support non représenté.

La bague intérieure 4 est pourvue d'un perçage central 7 destiné à recevoir une partie d'un arbre A représenté en traits mixtes. On note que le perçage 7 n'est pas symétrique. En effet, il comprend un chanfrein 7a sur un des côtés de la bague intérieure 4. Ce chanfrein 7a est adapté à la géométrie de l'arbre A et permet une immobilisation axiale de l'arbre A dans le perçage 7.

On note XX' l'axe de révolution de la surface principale du perçage 7. On note YY' un axe perpendiculaire à l'axe XX' passant par le centre de la bague intérieure 4 et compris dans le plan de la figure 1. On note ZZ' un axe perpendiculaire aux axes XX' et YY' et passant par le point d'intersection de ces axes. Grâce à la coopération des surfaces sphériques 3 et 5, la bague intérieure 4 est susceptible d'avoir un mouvement de rotation par rapport à la bague extérieure autour de chacun des axes XX', YY' et ZZ'.

Pour que l'orientation générale de la bague intérieure 4 soit conservée lorsque la bague extérieure 2 est maintenue en position grâce à la patte 6, il convient de limiter le mouvement de rotation de la bague 4 autour des axes YY' et ZZ'. En effet, compte tenu de la géométrie de l'arbre A et de sa coopération avec le chanfrein 7a, il importe de conserver le chanfrein 7a orienté vers la droite sur la figure 1.

On note respectivement 8 et 9 les surfaces latérales de la bague 4 reliant la surface 5 au perçage 7.

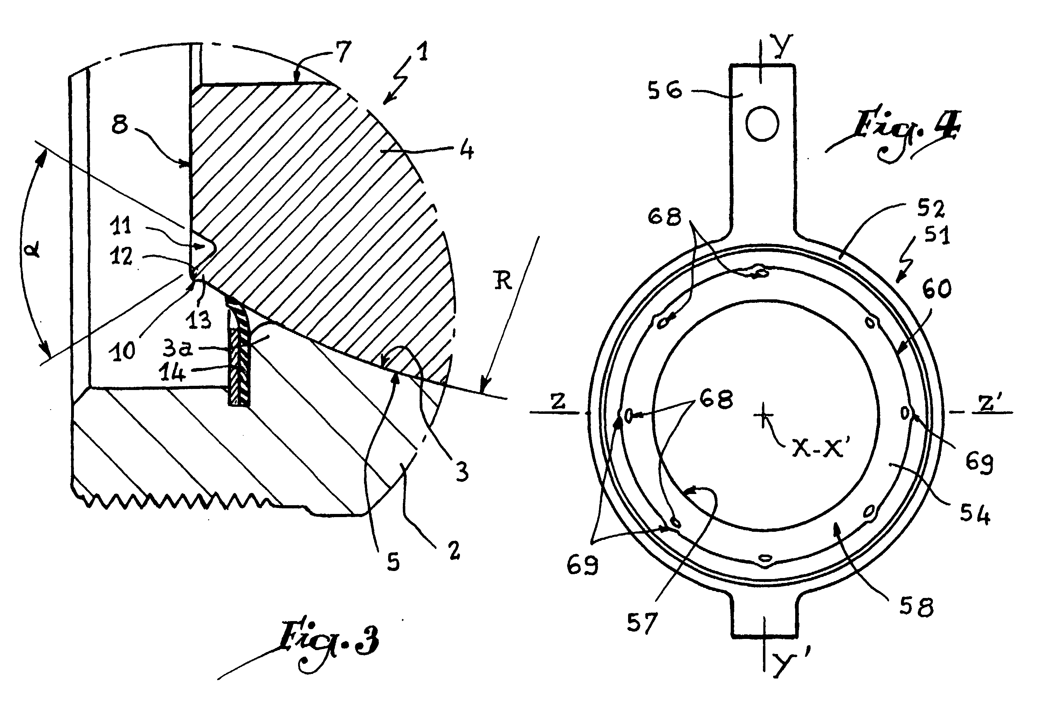

Conformément à l'invention et comme il apparaît plus clairement à la figure 3, la surface 8 est déformée plastiquement au voisinage de l'arête de raccordement 10 des surfaces 8 et 5 après que la bague 4 a été mise en place dans la bague 2.

Plus précisément, une gorge annulaire 11 est usinée sur la surface 8 à proximité de l'arête 10. On peut prévoir que la gorge 11 a une section en V, l'angle α d'ouverture de la gorge 11 étant compris entre 30 et 90°, de préférence de l'ordre de 60°.

Une lèvre 12 est ainsi définie entre l'arête 10 et la gorge 11.

Lorsque la bague 4 est en position à l'intérieur de la bague 2, il est possible de déformer la lèvre 12 en la repoussant vers l'extérieur, de telle sorte que la surface 5 est déformée vers l'extérieur à proximité de l'arête 10.

Une zone déformée 13 est ainsi créée dont la distance par rapport à l'axe XX' est supérieure à la distance de la surface 5 avant la déformation.

Dans la position de la figure 3, après que cette déformation plastique a eu lieu, lorsqu'on tente de faire tourner la bague intérieure 4 autour de l'axe ZZ' dans le sens trigonométrique, la surface 13 vient en butée contre un bord latéral 3a de la surface 3. Ainsi, une rotation d'environ 180° de la bague 4 autour de l'axe ZZ' alors que la bague 2 est maintenue fixe est impossible, de sorte qu'un opérateur ne risque pas d'insérer l'arbre A dans le perçage 7 alors que le chanfrein 7a est orienté vers la gauche sur la figure 1. En d'autres termes, la présence de la gorge 11, qui limite le mouvement de rotation de la bague 4, évite les erreurs de montage de l'arbre A par rapport à la rotule 1.

La déformation de la surface 8, c'est-à-dire le repoussage de la lèvre 12 vers l'extérieur, peut avoir lieu par poinçonnage ou par sertissage. En tout état de cause, il n'est pas nécessaire de prévoir un traitement thermique qui pourrait avoir pour conséquence de modifier localement le rayon R des surfaces 3 et 5 dans une partie éloignée des surfaces latérales 8 et 9. En outre, le poinçonnage ou sertissage qui intervient à froid peut être réalisé alors qu'un joint 14 en polytétrafluorohétylène est déjà en place sur la bague extérieure 2.

Il est également possible de prévoir que la gorge 11 est réalisée en une seule opération par poinçonnage ou par moletage, c'est-à-dire que l'on s'abstient d'une phase d'usinage préalable. Cette variante de l'invention permet de réaliser plus rapidement la rotule 1 alors que la précision obtenue reste compatible avec la plupart des applications.

Selon une variante non représentée de l'invention, on peut prévoir que la gorge 11 est composée de plusieurs sections correspondant chacune à un secteur angulaire. En effet, la déformation de la surface 5 peut être réalisée sur une partie seulement de la circonférence de l'arête 10.

Il serait également possible de prévoir que la surface latérale 9 est également pourvue d'une gorge analogue à la gorge 11. Cette gorge serait alors redondante avec la première, ce qui permettrait d'avoir une fonction de sécurité supplémentaire particulièrement utile dans le domaine aéronautique.

Dans le second mode réalisation de l'invention représenté à la figure 4, les éléments analogues à ceux du mode de réalisation des figures 1 à 3 portent des références identiques augmentées de 50. La rotule 51 de ce mode de réalisation, comprend une bague extérieure 52 et une bague intérieure 54, un perçage centrale 57 étant ménagé dans la bague 54 au bord d'un axe XX'. On suppose que le perçage 57 n'est pas symétrique par rapport au plan des axes YY' et ZZ'. La bague extérieure 52 est destinée à être fixée par rapport à son environnement grâce à une patte 56.

Conformément à l'invention, une surface latérale 58 de la bague 54 est déformée localement à proximité de son arête 60 de raccordement avec une surface extérieure sphérique non représentée de la bague 54. La surface 58 porte plusieurs empreintes 68 réalisées par poinçonnage, à l'aide de billes, à proximité de l'arête 60. Ces empreintes induisent une déformation locale vers l'extérieur d'une zone 69 située entre chacune d'entre elles et l'arête 60. Ces déformations locales, qui dans l'exemple représenté sont au nombre de 8, empêchent le passage de l'arête 60 à l'intérieur de la surface sphérique intérieure de la bague extérieure 52.

Comme dans l'exemple de réalisation précédent, on obtient donc un mouvement d'amplitude limité de la bague 54 par rapport à la bague 52 autour de chacun des axes YY' et ZZ'. Comme précédemment, on pourrait prévoir que des empreintes analogues sont prévues sur la face latérale opposée de la bague 54.

## Revendications

1. Procédé d'assemblage d'une rotule (1 ; 51) comprenant une bague extérieure (2 ; 52) et une bague intérieure (4 ; 54), ladite bague intérieure comprenant une surface externe sensiblement sphérique (5) et deux surfaces latérales (8, 9 ; 58), **caractérisé en ce qu'**il consiste à déformer plastiquement (11-13 ; 68, 69) au moins une surface latérale (8 ; 58) de ladite bague intérieure au voisinage d'une zone de raccordement (10 ; 60) de ladite surface latérale avec ladite surface sphérique, de telle sorte que ladite surface sphérique est déformée vers l'extérieur, la déformation de ladite surface latérale ayant lieu après le montage de ladite bague intérieure dans ladite bague extérieure.

2. Procédé d'assemblage d'une rotule selon la revendication 1, **caractérisé en ce que** la déformation de ladite surface latérale (8 ; 58) a lieu par poinçonnage ou sertissage.

3. Procédé d'assemblage d'une rotule selon la revendication 2, **caractérisé en ce que** ledit poinçonnage est effectué à l'aide d'au moins une bille.

4. Rotule d'articulation (1 ; 51) comprenant une bague extérieure (2 ; 52) pourvue d'une surface interne (3) globalement sphérique et une bague intérieure (4 ; 54) pourvue d'une surface externe (5) globalement sphérique de rayon (R) sensiblement identique à celui de la surface interne de ladite bague extérieure et deux surfaces latérales (8, 9 ; 58) reliant ladite surface sphérique externe à un perçage central (7 ; 57) de ladite bague intérieure, **caractérisée en ce que** l'une au moins desdites surfaces latérales (8 ; 58) est déformée plastiquement au voisinage d'une zone de raccordement (10, 60) de ladite surface latérale avec ladite surface sphérique externe, de telle sorte que ladite surface sphérique externe est déformée (13, 69) vers l'extérieur.

5. Rotule selon la revendication 4, **caractérisée en ce que** ladite surface latérale (8) est entaillée d'une gorge annulaire (11), au voisinage de ladite zone de raccordement (10) avec ladite surface sphérique (5), ladite gorge définissant une lèvre (12) entre elle-même et ladite zone de raccordement, ladite lèvre étant repoussée (13) vers l'extérieur à partir de ladite gorge.

6. Rotule selon la revendication 5, **caractérisée en ce que** ladite lèvre (12) est repoussée par poinçonnage ou sertissage, après réalisation de ladite gorge (11) par usinage.

7. Rotule selon la revendication 5, **caractérisée ce que** ladite lèvre (12) est repoussée par poinçonnage ou moletage au cours de la réalisation de ladite gorge (11).

8. Rotule selon l'une des revendications 5 à 7, **caractérisée en ce que** ladite gorge annulaire est composée de plusieurs sections correspondant chacune à un secteur angulaire.

9. Rotule selon la revendication 4, **caractérisée en ce que** ladite surface latérale (58) est marquée d'au moins une empreinte (68) obtenue par poinçonnage au voisinage de la zone (60) de raccordement de ladite surface latérale avec ladite surface sphérique.

## Patentansprüche

1. Verfahren zum Zusammensetzen eines Kugelgelenks (1; 51) mit einem Außenring (2; 52) und einem Innenring (4; 54), wobei der Innenring eine im Wesentlichen sphärische Außenfläche (5) und zwei Seitenflächen (8, 9; 58) umfasst,
**dadurch gekennzeichnet, dass** es darin besteht, plastisch (11-13; 68, 69) mindestens eine Seitenfläche (8; 58) des Innenrings in der Nähe einer Verbindungszone (10; 60) der Seitenfläche mit der sphärischen Fläche zu verformen, derart, dass die sphärische Fläche nach außen verformt wird, wobei die Verformung der Seitenfläche nach der Montage des Innenringes in den Außenring stattfindet.

2. Verfahren zum Zusammensetzen eines Kugelgelenks nach Anspruch 1, **dadurch gekennzeichnet, dass** die Verformung der Seitenfläche (8; 58) durch Eindrückung oder Quetschung stattfindet.

3. Verfahren zum Zusammensetzen eines Kugelgelenks nach Anspruch 2, **dadurch gekennzeichnet, dass** die Eindrückung mit Hilfe mindestens einer Kugel durchgeführt wird.

4. Kugelgelenk (1; 51) umfassend einen mit einer im Wesentlichen sphärischen Innenfläche (3) versehenen Außenring (2; 52) und einen Innenring (4; 54), der mit einer im Wesentlichen sphärischen Außenfläche (5) mit einem Radius (R), der im Wesentlichen identisch zu dem der Innenfläche des Außenringes ist, und zwei Seitenflächen (8, 9; 58) versehen ist, die die sphärische Außenfläche mit einer Mittelbohrung (7; 57) des Innenringes verbinden, **dadurch gekennzeichnet, dass** mindestens eine der Seitenflächen (8; 58) plastisch in der Nähe einer Verbindungszone (10, 60) der Seitenfläche mit der sphärischen Außenfläche verformt ist, derart, dass die sphärische Außenfläche nach außen verformt ist (13, 69).

5. Kugelgelenk nach Anspruch 4, **dadurch gekennzeichnet, dass** in die Seitenfläche (8) eine Ringnut (11) in der Nähe der Verbindungszone (10) mit der sphärischen Fläche (5) eingeschnitten ist, wobei die Nut eine Lippe (12) zwischen sich und der Verbindungszone begrenzt, wobei die Lippe ausgehend von der Nut nach außen gedrückt (13) ist.

6. Kugelgelenk nach Anspruch 5, **dadurch gekennzeichnet, dass** die Lippe (12) durch Eindrückung oder Quetschung nach der Herstellung der Nut (11) durch maschinelle Bearbeitung hervorgedrückt ist.

7. Kugelgelenk nach Anspruch 5, **dadurch gekennzeichnet, dass** die Lippe (12) durch Eindrückung oder Molettieren während der Herstellung der Nut (11) herausgedrückt ist.

8. Kugelgelenk nach einem der Ansprüche 5 bis 7, **dadurch gekennzeichnet, dass** die Ringnut aus mehreren Abschnitten zusammengesetzt ist, die jeweils einem Winkelsektor entsprechen.

9. Kugelgelenk nach Anspruch 4, **dadurch gekennzeichnet, dass** die Seitenfläche (58) mit mindestens einem durch Eindrückung in der Nähe der Verbindungszone (60) der Seitenfläche mit der sphärischen Fläche erhaltenen Eindruck (68) markiert ist.

## Claims

1. Method for assembling a ball joint (1; 51 ) comprising an outer ring (2 ; 52) and an inner ring (4 ; 54), said inner ring comprising a substantially spherical external surface (5) and two lateral surfaces (8, 9 ; 58),
**characterised in that** it consists in plastically deforming (11-13 ; 68, 69) at least one lateral surface (8 ; 58) of said inner ring in the vicinity of a zone (10 ; 60) connecting said lateral surface to said spherical surface, thereby deforming said spherical surface in an outward direction, the deformation of said lateral surface taking place after said inner ring has been mounted in said outer ring.

2. Method for assembling a ball joint according to claim 1, **characterised in that** the deformation of said lateral surface (8 ; 58) is done by punching or tacking and fastening.

3. Method for assembling a ball joint according to claim 2, **characterised in that** said punching is carried out with the aid of at least one ball.

4. Ball joint (1 ; 51) comprising an outer ring (2 ; 52) provided with a totally spherical internal surface (3) and an inner ring (4 ; 54) provided with a totally spherical external surface (5) having a diameter (R) substantially identical to that of the internal surface of said outer ring and two lateral surfaces (8 , 9 ; 58) joining said spherical external surface to a central hole (7 ; 57) in said inner ring, **characterised in that** at least one of said lateral surfaces (8 ; 58) is deformed plastically in the vicinity of a zone (10, 60) connecting said lateral surface to said external spherical surface, thereby deforming said external spherical surface (13, 69) in an outward direction.

5. Ball joint according to claim 4, **characterised in that** said lateral surface (8) is recessed with an annular throat (11) in the vicinity of said connecting zone (10) to said spherical surface (5), said throat defining a lip (12) between itself and said connecting zone, said lip being chased (13) in an outward direction from said throat.

6. Ball joint according to claim 5, **characterised in that** said lip (12) is chased by punching or tacking and fastening it, after said throat (11) has been produced by machining.

7. Ball joint according to claim 5, **characterised in that** said lip (12) is chased by punching or knurling in the course of producing said throat (11 ).

8. Ball joint according to any of claims 5 to 7, **characterised in that** said annular throat is made up of a plurality of sections each of which corresponds to an angular sector.

9. Ball joint according to claim 4, **characterised in that** said lateral surface (58) is marked with at least one indent (68) obtained by punching it in the vicinity of the zone (60) connecting said lateral surface to said spherical surface.
